# EUROPÄISCHE PATENTSCHRIFT

(11) **EP 4 079 139 B1**
(45) Veröffentlichungstag und Bekanntmachung des Hinweises auf die Patenterteilung: **08.07.2026**
(21) Anmeldenummer: 22000090.5
(22) Anmeldetag: 28.03.2022
(51) Int. Cl.: A01D 34/86

(54) **FAHRZEUG MIT EINEM SEITLICH AUSGREIFBAREN AUSLEGER**
VEHICLE WITH A LATERALLY PROJECTING BOOM
VÉHICULE DOTÉ D'UN BRAS EXTENSIBLE LATÉRALEMENT

(30) Priorität: 23.04.2021 DE 102021002151
(43) Veröffentlichungstag der Anmeldung: 26.10.2022
(73) Patentinhaber: Wesseler, Guido, 48691 Vreden (DE)
(72) Erfinder: Wesseler, Guido, 48691 Vreden (DE)
(74) Vertreter: Busse, Harald F.W.

(56) Entgegenhaltungen:
- EP-A1- 1 776 857
- WO-A1-92/11750
- FR-A1- 2 642 797
- GB-A- 1 156 452
- GB-A- 2 129 265
- IT-A1- BO 940 220

## Beschreibung

Die Erfindung betrifft ein Fahrzeug (1) mit zumindest einem seitlich ausgreifbaren Ausleger zur Halterung eines Arbeitskopfs, insbesondere eines Fräs- oder Mähkopfs, wobei ein anmontierter Arbeitskopf um eine parallel zur Fahrtrichtung liegende Halteachse schwenkbar ist, wobei je nach Lage und Ausbildung des zu bearbeitenden Bereichs von außen eine Kraft in einem oder anderen Schwenksinn auf den Arbeitskopf eintragbar ist,, nach dem Oberbegriff des Anspruchs 1.

Solche Fahrzeuge sind grundsätzlich bekannt. Mit der Schwenkbarkeit des Arbeitskopfs sind zum Beispiel quer zur Fahrtrichtung nach links oder nach rechts abfallende Hänge, Deiche, Grabeneinfassungen und ähnliches zu bearbeiten. Dabei stellt sich jedoch das Problem, daß je nach Beschaffenheit der zu bearbeitenden Fläche, beispielsweise eines Bodens, von außen eine Kraft in einem Schwenksinn eingeleitet werden kann, der eine gewünschte Parallellage des Arbeitskopfs zur bearbeitenden Fläche verhindert, sondern vielmehr den Arbeitskopf in dem einen oder anderen Schwenksinn mit äußerer Kraft beaufschlagt, so daß es zu einem unregelmäßigen Bearbeitungsbild kommen kann und gerade bei unebenen Bereichen ein häufiges manuelles Nachstellen durch den Bediener erforderlich ist.

Die IT BO 940 220 A1 zeigt zwei außen und unten am Arbeitskopf befindliche Sensoren zur Aufnahme von Schrägstellungen des Arbeitskopfes zum Untergrund, die über eine elektronische Auswertung Stellglieder zur Bewirkung einer Gegenkraft ansteuern. Durch die Anordnung der Sensoren liegen diese im Verschmutzungsbereich, wobei "Verschmutzung" auch Verformung durch Steinschlag oder eingeklemmte Steine, eindringendes Wasser oder Funktionsverfälschungen durch Vibrationen bedeuten kann. Von derartigen Sensoren ist daher keine hohe Betriebssicherheit zu erwarten. Die Exaktheit der Meßwerte läßt gerade bei Arbeiten an Gewässerufern oder anderen sehr nassen und/oder sandigen oder steinigen Bereichen sehr zu wünschen übrig.

Der Erfindung liegt das Problem zugrunde, hier eine Verbesserung zu erreichen.

Die Erfindung löst dieses Problem durch ein - selbstfahrendes oder gezogenes - Fahrzeug mit den Merkmalen des Anspruchs 1. Hinsichtlich weiterer Ausgestaltungen der Erfindung wird auf die abhängigen Ansprüche 2 bis 15 verwiesen.

Dadurch, daß das Fahrzeug mit zumindest einem seitlich ausgreifbaren Ausleger zur Halterung eines Arbeitskopfs so ausgebildet ist, daß der Arbeitskopf mit einer Sensorik zur Ermittlung einer Druckdifferenz und mit einer Stelleinrichtung für den Ausrichtwinkel des Arbeitskopfs um die Halteachse versehen ist, wobei eine Druckdifferenz zwischen einem quer zwischen der Halteachse und dem tragenden Fahrzeug liegenden inneren Auflagebereich des Arbeitskopfs und einem quer außerhalb der Achse liegenden äußeren Auflagebereich des Arbeitskopfs ermittelbar ist, ist eine automatische Nachstellung des Winkels des Arbeitskopfs möglich. Diese Nachstellung bringt den Arbeitskopf bezüglich der zu bearbeitenden Fläche in eine Parallellage, indem automatisiert der Ausrichtwinkel des Arbeitskopfs um die Halteachse korrigierbar ist. Dadurch, daß dem Arbeitskopf zumindest zwei in einer Richtung quer zur Halteachse zueinander beabstandete Hydraulikzylinder zugeordnet sind, deren Druckdifferenz von der Sensorik erfaßbar ist, müssen keine tief liegenden, im Verschmutzungsbereich angeordnete Sensoren vorgesehen sein. Die Betriebssicherheit der erfindungsgemäßen Sensorik ist daher sehr hoch.

Es kann während des fahrenden Betriebs eine Regelung des Ausrichtwinkels stattfinden, eine manuelle Steuerung ist nicht nötig.

Wenn die Stelleinrichtung hydraulisch oder pneumatisch ist, ist eine einfache Realisierung mit Standardteilen möglich. Insbesondere kann die Stelleinrichtung hydraulisch sein, da eine Hydraulik ohnehin am Fahrzeug vorhanden ist.

Auch bei möglichen großen Auslagen des Arbeitskopfs von über sieben Metern, auch über 10 Metern, zum nächstliegenden Längsrand des Fahrzeugs ist die Erfindung besonders notwendig und sinnvoll einsetzbar.

Erfindungsgemäß sind dem Arbeitskopf zumindest zwei in einer Richtung quer zur Halteachse zueinander beabstandete Hydraulikzylinder zugeordnet, deren momentane Druckdifferenz von der Sensorik erfaßbar ist und die jeweils zwischen einem Halterahmen des Arbeitskopfes und einem im Betrieb mit Kontakt zum bearbeitenden Bereich versehenen Arbeitsmittel angeordnet sind. Das heißt, es kann über die genannten Hydraulikzylinder eine nicht optimale Winkelausrichtung des Arbeitsmittels durch unterschiedliche Einfahrzustände der Zylinder erfaßt werden. Diese Daten können als Eingangsdaten für die Stelleinrichtung dienen, die dann aktiv den Ausrichtwinkel korrigieren kann.

Dabei ist keine absolute Druckmessung erforderlich, sondern für einen sehr einfachen Aufbau reicht eine Erfassung einer Druckdifferenz zwischen den Zylindern.

Einfach und effektiv ist ein erster Hydraulikzylinder zur Erfassung einer äußeren Krafteinwirkung auf den inneren Auflagebereich - also zwischen Halteachse und Fahrzeug - und ein zweiter Hydraulikzylinder zur Erfassung einer äußeren Krafteinwirkung auf den äußeren Auflagebereich - also quer außen jenseits der Halteachse - vorgesehen. Damit kann jede Verkippung gegenüber der Idealausrichtung um die Halteachse erfaßt und über die Stelleinrichtung korrigiert werden.

Anstelle der Hydraulikzylinder könnten auch andere Erfassungsmittel dienen, zum Beispiel auch piezo-elektrische Elemente, Druckstreifen etc..

Besonders günstig ist allein über die Druckdifferenz eine Abweichung vom Gleichgewicht der Ausrichtung detektierbar und darüber zumindest eine Stelleinrichtung ansteuerbar. Hierfür kann zum Beispiel eine Bypassleitung zwischen beiden Hydraulikzylindern verlaufen, die mit einer Membran in der Mitte versehen ist, deren Ausschlag in die eine oder andere Richtung von der Sensorik erfaßt werden kann, um damit die Stelleinrichtung anzusteuern, die mit einem Ende am äußeren, die Halteachse tragenden Teil des Auslegers gehalten sein kann und sich von dort aus zum Arbeitskopf erstreckt. Dadurch ist über Ein- und Ausfahren der Stelleinrichtung die Ausrichtung vom Arbeitskopf relativ zum Ausleger veränderbar.

Einfach ist bei einer Druckentlastung des zweiten Hydraulikzylinders die Druckbeaufschlagung des äußeren Auflagebereichs auf den zu bearbeiteten Bereich von der Stelleinrichtung verringerbar, so daß sich auf den äußeren Auflagebereich eine Zugkraft ergibt und der Winkel des Arbeitskopfs in Ansicht von vorne im Uhrzeigersinn veränderbar ist.

Ebenso kann bei einer Druckentlastung des ersten Hydraulikzylinders die Druckbeaufschlagung des äußeren Auflagebereichs auf den zu bearbeiteten Bereich von der Stelleinrichtung vergrößerbar sein, so daß sich dann auf den äußeren Auflagebereich eine zusätzliche Druckkraft ergibt und der Winkel des Arbeitskopfs in Ansicht von vorne entgegen dem Uhrzeigersinn veränderbar ist.

In beiden Fällen kann automatisch die Nachstellung des Winkels so lange anhalten, bis die Sensorik auf beiden Seiten der Halteachse einen gleichen Druck ermittelt.

Um die Erfassung einfach und ohne Elektronikaufwand zu gestalten, kann ein Ende eines jeden Hydraulikzylinders mittelbar oder unmittelbar mit einem den Boden abtastenden Tastorgan verbunden sein. Diese Verbindung kann rein mechanisch sein.

Günstig und im Aufbau einfach ist als Tastorgan zumindest ein Arbeitsmittel, insbesondere eine Mähwalze, vorgesehen.

Um zu verhindern, daß ein druckentlasteter Hydraulikzylinder voll Öl läuft, können die Hydraulikzylinder über Rückschlagventile abgesichert sein.

Die Membran oder ähnliche Meßeinrichtung muß nicht quermittig zwischen den Hydraulikzylindern angebracht sein, sondern die Sensorik kann insgesamt seitlich am Arbeitskopf angebracht sein und dort ein oder mehrere über Schläuche oder Leitungen mit den Hydraulikzylindern verbundene Widerstandsmeßgeräte umfassen.

Damit ist auch eine Nachrüstung der Erfindung an bestehende Arbeitsköpfe mit nur wenig Aufwand möglich.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine beispielhafte Ansicht von vorne auf ein Fahrzeug mit einem weit ausgefahrenen Ausleger und mit einem an einer Grabenflanke gehaltenen Arbeitskopf, bei dem ein Stellglied eine Zusatzkraft zur Erzeugung eines Drehsinns im Uhrzeigersinn aufbringt und für einen Ausgleich der Sensorik sorgt,
- Fig. 2: den dem Arbeitskopf nahe gelegenen Bereich des Auslegers mit daran gehaltenem Arbeitskopf im Detail in Stellung nach Figur 1,
- Fig. 3: eine ähnliche Ansicht wie Figur 2, jedoch in einer Schwimmstellung ohne Aufbringung der Zusatzkraft durch ein Stellglied.

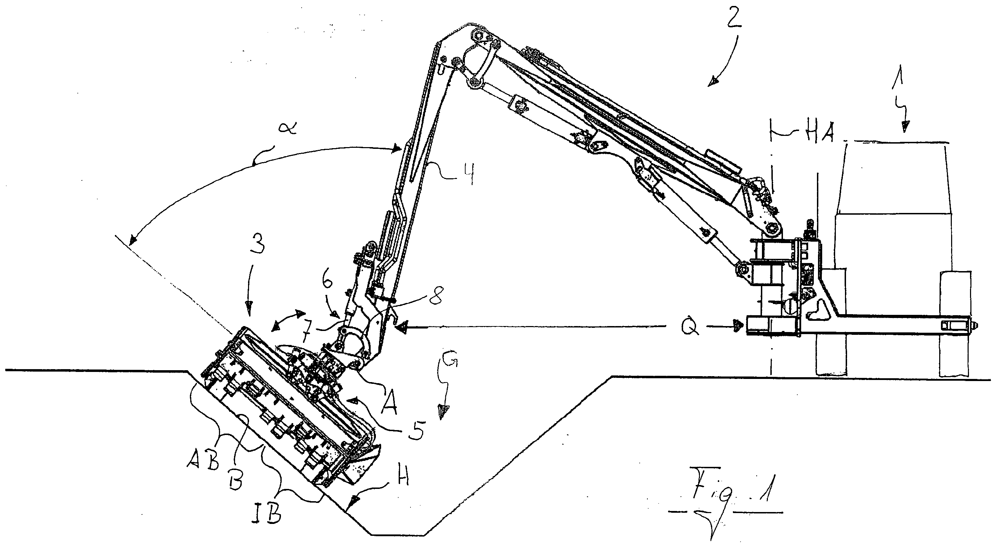

Das in Figur 1 in Draufsicht gezeigte Fahrzeug 1 kann wie hier ein Selbstfahrer sein. Auch gezogene oder geschobene Fahrzeuge kommen in Betracht. Hier ist ein Straßenfahrzeug dargestellt. Alternativ könnte auch ein Schienenfahrzeug erfindungsgemäß ausgebildet sein.

Das Fahrzeug 1 ist beispielsweise wie in Figur 1 ein landwirtschaftlicher Schlepper oder auf einem kleinen LKW, etwa einem Unimog, aufgebaut. Die Fahrzeuggröße ist je nach Anforderung variabel.

Das Fahrzeug 1 ist mit zumindest einer Mäh- oder Fräseinrichtung 2 versehen, die einen oder mehrere Arbeitsköpfe 3 umfassen kann. Dieser oder diese kann oder können an einem mehrgelenkigen und auch um eine Hochachse HA schwenkbaren Ausleger 4 derart gehalten sein, daß er oder sie im seitlichen Querabstand Q von einigen Metern zum Fahrzeug 1 arbeiten kann oder können - dies auch in abgewinkelter Stellung, etwa hier am Hang H eines Grabens G. Die Auslage kann dabei derart groß sein, daß ein Querabstand Q zum zugewandten Fahrzeuglängsrand von zum Beispiel sieben bis zwölf Metern möglich ist. Auch mehrere Ausleger 4 können an einem Fahrzeug 1 vorgesehen sein.

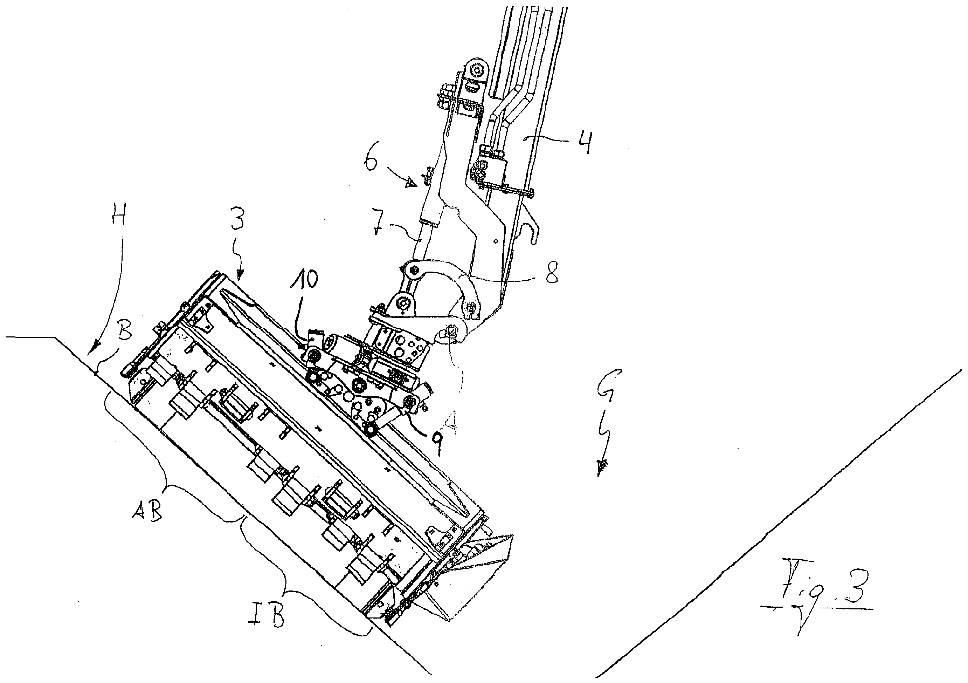

Der an dem Ausleger 4 gehaltene Arbeitskopf 3 kann etwa ein Fräs- oder Mähkopf sein und um eine parallel zur Fahrtrichtung liegende Halteachse A schwenkbar gegenüber dem haltenden Ende des Auslegers 4 sein. Die Richtung des Schwenkens um diese Achse A ist etwa in einer Schwimmstellung wie in Figur 3 von äußeren Gegebenheiten abhängig. An dem dort gezeigten Hang H wird ein quer außerhalb der Projektion der Halteachse A auf den Boden B liegender äußerer Auflagebereich AB des Arbeitskopfs 3 wegen seiner Gewichtskraft einen hohen Druck auf den Boden des Hangs H ausüben, wohingegen der in einem quer zwischen der Halteachse A und dem tragenden Fahrzeug 1 liegende innere Auflagebereich IB des Arbeitskopfs tendenziell eher angehoben und nur einen geringen Bodenkontakt aufweist. Die Schwimmstellung würde daher zu einem ungleichmäßigen Arbeitsbild führen und im äußeren Auflagebereich AB, insbesondere ganz am äußeren Querrand, die Gefahr mit sich bringen, daß zu tief in den Boden eingearbeitet wird. Der äußere Auflagebereich AB erfährt daher von außen eine hohe Druckkraft, der zu einem resultierenden Schwenksinn des Arbeitskopfs 3 im Uhrzeigersinn U um die Achse A führt.

Der Arbeitskopf 3, hier Mähkopf, kann dabei über eine Tastwalze oder ähnliches über den Boden B geführt werden und dabei auch in seinem Einsatz große Schrägwinkel wie in Figur 1 ermöglichen. Gleichzeitig ist durch das Schwenken um die Hochachse HA auch eine weite Auslage in oder gegen die Fahrtrichtung möglich. Insbesondere kann der Ausleger 4 weit nach vorne geschwenkt werden, um dem Fahrer eine gute Sicht auf den Arbeitskopf 3 im Betrieb zu ermöglichen.

Um diesen Zusatzdrehsinn von außen zu ermitteln, ist der Arbeitskopf 3 mit einer Sensorik 5 zur Ermittlung einer Druckdifferenz zwischen dem quer zwischen der Halteachse A und dem tragenden Fahrzeug 1 liegenden inneren Auflagebereich IB des Arbeitskopfs 3 und dem quer außerhalb der Achse A liegenden äußeren Auflagebereich AB des Arbeitskopfs versehen. Diese Sensorik 5 ist im folgenden noch im Detail erläutert.

Um dem ermittelten Zusatzdrehsinn entgegenwirken und für einen Druckausgleich zwischen dem inneren Auflagebereich IB und dem äußeren Auflagebereich AB sorgen zu können, ist zudem eine Stelleinrichtung 6 vorgesehen, mit der der Ausrichtwinkel α des Arbeitskopfs 3 um die Halteachse A korrigierbar ist.

Die Stelleinrichtung 6 kann beispielsweise hydraulisch oder pneumatisch arbeiten. Hier ist eine hydraulische Stelleinrichtung 6 gezeichnet, da ohnehin zumindest für die Bewegung des Auslegers 4 eine Hydraulik vorhanden ist.

Die Stelleinrichtung 6 kann daher insbesondere einen stellenden Hydraulikzylinder 7 umfassen, der ungefähr parallel zu dem dem Arbeitskopf 3 zugewandten Ende des Auslegers 4 gehalten ist und mit seinem ausgreifenden Ende am Arbeitskopf 3 etwas seitlich neben der Halteachse A angreift, so daß durch Ein- oder Ausfahren des Hydraulikzylinders 7 ein Drehmoment auf den Arbeitskopf 3 im oder gegen den Uhrzeigersinn U mit Hilfe einer Schwinge 8 aufgebracht werden kann.

Für die Sensorik 5 sind dem Arbeitskopf zumindest zwei in einer Richtung quer zur Halteachse zueinander beabstandete Hydraulikzylinder 9, 10 zugeordnet. Diese stehen während des Betriebs nahezu senkrecht oder leicht schräg zum Boden B und sind durch den äußeren Druck auf den inneren Auflagebereich IB oder den äußeren Auflagebereich AB unterschiedlich weit eindrückbar. Damit ergibt sich eine Druckdifferenz zwischen den beiden Hydraulikzylindern 9,10, die erfaßbar ist.

Diese Hydraulikzylinder 9, 10 sind jeweils zwischen einem Halterahmen des Arbeitskopfes 3 und einem im Betrieb mit Kontakt zum bearbeitenden Bereich, hier also dem Boden B, versehenen Arbeitsmittel und/oder Tastorgan angeordnet.

Dabei ist keinerlei Messung von Absolutdrücken nötig, sondern es reicht eine Erfassung einer Druckdifferenz zwischen den beiden Hydraulikzylindern 9,10. Diese können zum Beispiel über Leitungen 11, die zur Seite des Arbeitskopfs 3 führen, miteinander verbunden sein, so daß dort die Auslenkung einer Membran oder eines ähnlichen Differenzmessers meßbar ist, zum Beispiel über eine elektrische Widerstandsmessung. Damit ist eine derartige Sensorik 5 auch einfach an bestehende Arbeitsköpfe 3 nachrüstbar.

Dabei erfaßt der erste Hydraulikzylinder 9 eine äußere Krafteinwirkung auf den inneren Auflagebereich IA und der zweite, weiter quer außen liegende Hydraulikzylinder 10 eine äußere Krafteinwirkung auf den äußeren Auflagebereich IB. Nur wenn beide Krafteinwirkungen gleich sind, ergibt sich die gewünschte parallele Bodenbearbeitung, also ein gleichmäßiger Druck auf den Boden B, der nicht einseitig zunimmt.

Mit der beschriebenen, von der Sensorik 5 erfaßten Druckdifferenz ist die o. g. zumindest eine Stelleinrichtung 6 ansteuerbar. Durch deren Druck oder Zug ist dann der Winkel α, also die Winkelausrichtung zwischen einem die Halteachse tragenden Teil des Auslegers 4 und dem Arbeitskopf 3, veränderbar und so korrigierbar, daß der äußere Druck auf die verschiedenen Querseiten des Arbeitskopfs 3 ausgeglichen wird.

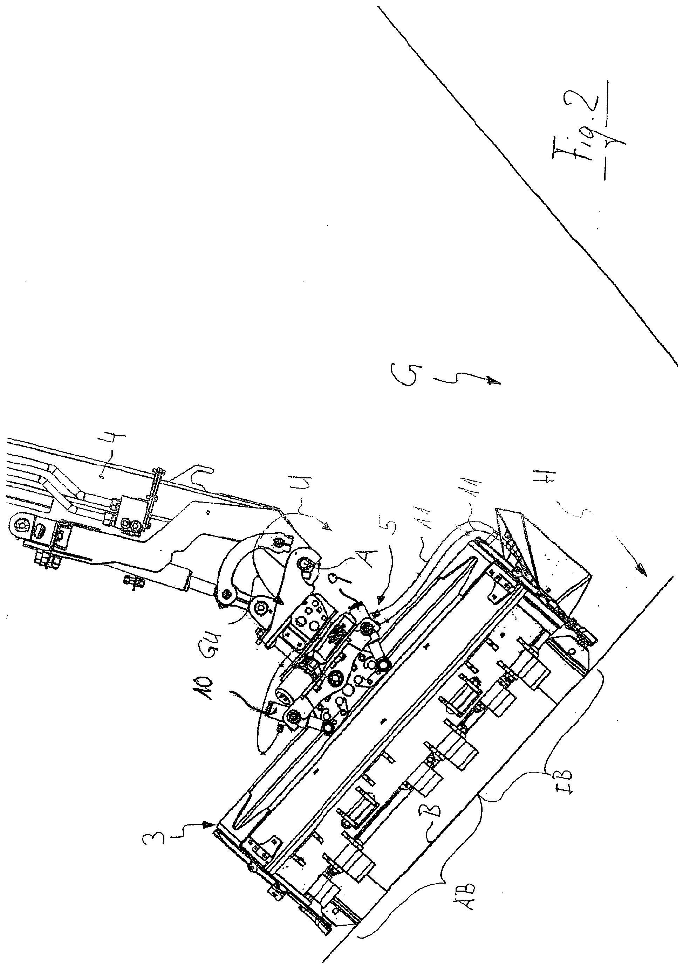

Dies funktioniert so, daß bei einer Druckentlastung des zweiten, quer außen angreifenden Hydraulikzylinders 10 die Druckbeaufschlagung des äußeren Auflagebereichs IB auf den zu bearbeiteten Bereich des Bodens B von der Stelleinrichtung 6 verringerbar ist, so daß sich auf den äußeren Auflagebereich eine Zugkraft ergibt (Übergang von Figur 3 zu Figur 2). Damit kann der äußere Hydraulikzylinder 10 ausfahren und der Winkel α des Arbeitskopfs 3 in Ansicht von vorne im Uhrzeigersinn U verändert werden.

Umgekehrt wird bei einer Druckentlastung des ersten, quer innen liegenden Hydraulikzylinders 9 die Druckbeaufschlagung des äußeren Auflagebereichs AB auf den zu bearbeiteten Bereich von der Stelleinrichtung 6 vergrößert, so daß sich auf den äußeren Auflagebereich AB dann eine zusätzliche Druckkraft ergibt und der Winkel α des Arbeitskopfs 3 in Ansicht von vorne entgegen dem Uhrzeigersinn GU veränderbar ist.

In beiden Fällen hält die Nachstellung des Winkels a so lange an, bis die Sensorik 5 auf beiden Seiten der Achse A einen gleichen Druck ermittelt. Dann sind die hier gezeigten beiden Hydraulikzylinder 9, 10 der Sensorik 5 gleichweit ausgefahren. Der Differenzdruck wird Null, die Ansteuerung der Stelleinrichtung 6 endet somit.

Ein Ende eines jeden Hydraulikzylinders 9, 10, hier die Kolbenstangenseite ist, um seine Druckbeaufschlagung zu ermitteln, mittelbar oder unmittelbar mit einem den Boden abtastenden Tastorgan verbunden. Dieses kann zum Beispiel ein Arbeitsmittel, insbesondere eine Mähwalze, sein.

Die Hydraulikzylinder 9, 10 der Sensorik 5 sind über Rückschlagventile abgesichert sind, so daß sie bei Entlastung nicht mit Öl vollaufen.

### Bezugszeichenliste:

| | | | |
|---|---|---|---|
| 1 | Fahrzeug, | HA | Hochachse, |
| 2 | Mäh- oder Fräseinrichtung, | F | Fahrtrichtung, |
| 3 | Arbeitskopf, | G | Graben, |
| 4 | Ausleger, | H | Hang, |
| 5 | Sensorik, | A | Halteachse, |
| 6 | Stelleinrichtung, | Q | Querabstand, |
| 7 | Hydraulikzylinder, | IB | innerer Auflagebereich, |
| 8 | Schwinge, | AB | äußerer Auflagebereich, |
| 9 | Hydraulikzylinder, | U | Uhrzeigersinn, |
| 10 1 | Hydraulikzylinder, | GU | Gegenuhrzeigersinn |
| 1 | Leitungen, | | |

## Patentansprüche

1. Fahrzeug (1) mit zumindest einem seitlich ausgreifbaren Ausleger (4) zur Halterung eines Arbeitskopfs (3), insbesondere eines Fräs- oder Mähkopfs, wobei ein anmontierter Arbeitskopf (3) um eine parallel zur Fahrtrichtung liegende Halteachse (A) schwenkbar ist, wobei je nach Lage und Ausbildung des zu bearbeitenden Bereichs (B) von außen eine Kraft in einem oder anderen Schwenksinn (U;GU) auf den Arbeitskopf (3) eintragbar ist,
**dadurch gekennzeichnet,**
**daß** der Arbeitskopf (3) mit einer Sensorik (5) zur Ermittlung einer Druckdifferenz und mit einer Stelleinrichtung (6) für den Ausrichtwinkel (α) des Arbeitskopfs (3) um die Halteachse (A) versehen ist, wobei eine Druckdifferenz zwischen einem quer zwischen einer Projektion der Halteachse auf den Boden (B) und dem tragenden Fahrzeug (1) liegenden inneren Auflagebereich (IB) des Arbeitskopfs (3) und einem quer außerhalb der Projektion liegenden äußeren Auflagebereich (AB) des Arbeitskopfs (3) ermittelbar ist, wobei dem Arbeitskopf (3) zumindest zwei in einer Richtung quer zur Halteachse zueinander beabstandete Hydraulikzylinder (9;10) zugeordnet sind, deren Druckdifferenz von der Sensorik (5) erfaßbar ist und die jeweils zwischen einem Halterahmen des Arbeitskopfes (3) und einem im Betrieb mit Kontakt zum bearbeitenden Bereich versehenen Arbeitsmittel und/oder Tastmittel angeordnet sind.

2. Fahrzeug (1) nach Anspruch 1,
**dadurch gekennzeichnet,**
**daß** die Stelleinrichtung (6) hydraulisch oder pneumatisch ist.

3. Fahrzeug (1) nach Anspruch 2,
**dadurch gekennzeichnet,**
**daß** die Stelleinrichtung (6) hydraulisch ist.

4. Fahrzeug (1) nach einem der Ansprüche 1 bis 3,
**dadurch gekennzeichnet,**
**daß** der Ausleger (4) in größter Auslage einen Querabstand (Q) der Halteachse (A) von über sieben Metern zum nächstliegenden Längsrand des Fahrzeugs (1) ermöglicht.

5. Fahrzeug (1) nach einem der Ansprüche 1 bis 4,
**dadurch gekennzeichnet,**
**daß** eine Erfassung einer Druckdifferenz zwischen den zwei in einer Richtung quer zur Halteachse zueinander beabstandeten Hydraulikzvlindern (9;10) von der Sensorik (5) ohne Erfassung der Absolutdrücke stattfindet.

6. Fahrzeug (1) nach einem der Ansprüche 1 bis 5,
**dadurch gekennzeichnet,**
**daß** ein erster Hydraulikzylinder (9) zur Erfassung einer äußeren Krafteinwirkung auf den inneren Auflagebereich (IB) und ein zweiter Hydraulikzylinder (10) zur Erfassung einer äußeren Krafteinwirkung auf den äußeren Auflagebereich (AB) vorgesehen ist.

7. Fahrzeug (1) nach Anspruch 6,
**dadurch gekennzeichnet,**
**daß** über eine von der Sensorik (5) erfaßte Druckdifferenz zumindest eine Stelleinrichtung (6) ansteuerbar ist, von dem die Winkelausrichtung zwischen einem die Halteachse (A) tragenden Teil des Auslegers (4) und dem Arbeitskopf (3) veränderbar ist.

8. Fahrzeug (1) nach einem der Ansprüche 1 bis 7,
**dadurch gekennzeichnet,**
**daß** bei einer Verringerung des äußeren Druckes auf den äußeren Auflagebereich (AB) durch Aktivität der Stelleinrichtung (6) eine Druckentlastung des zweiten Hydraulikzylinders (10) detektierbar ist, sich auf den äußeren Auflagebereich (AB) eine Zugkraft ergibt und der Winkel (α) des Arbeitskopfs (3) in Ansicht von vorne im Uhrzeigersinn (U) veränderbar ist.

9. Fahrzeug (1) nach einem der Ansprüche 1 bis 8,
**dadurch gekennzeichnet,**
**daß** bei einer Steigerung des äußeren Druckes auf den äußeren Auflagebereich (AB) durch Aktivität der Stelleinrichtung (6) eine Druckentlastung des ersten Hydraulikzylinders (9) detektierbar ist, sich auf den äußeren Auflagebereich (AB) eine Druckkraft ergibt und der Winkel (α) des Arbeitskopfs (3) in Ansicht von vorne gegen den Uhrzeigersinn (GU) veränderbar ist.

10. Fahrzeug (1) nach einem der Ansprüche 1 bis 9,
**dadurch gekennzeichnet,**
**daß** die Nachstellung des Winkels (α) so lange anhält, bis die Sensorik (5) auf beiden Seiten der Achse einen gleichen Druck ermittelt.

11. Fahrzeug (1) nach einem der Ansprüche 1 bis 10,
**dadurch gekennzeichnet,**
**daß** ein Ende eines jeden Hydraulikzylinders (9;10) mittelbar oder unmittelbar mit einem den Boden (B) abtastenden Tastorgan verbunden ist.

12. Fahrzeug (1) nach Anspruch 11,
**dadurch gekennzeichnet,**
**daß** als Tastorgan zumindest ein Arbeitsmittel, insbesondere eine Mähwalze, dient.

13. Fahrzeug (1) nach einem der Ansprüche 1 bis 12,
**dadurch gekennzeichnet,**
**daß** die Hydraulikzylinder (9;10) der Sensorik (5) über Rückschlagventile abgesichert sind.

14. Fahrzeug (1) nach einem der Ansprüche 1 bis 13,
**dadurch gekennzeichnet,**
**daß** die Sensorik seitlich am Arbeitskopf (3) angebrachte und mit den Hydraulikzylindern (9;10) verbundene elektrische Widerstandsmeßgeräte umfaßt.

15. Fahrzeug (1) nach einem der Ansprüche 1 bis 14,
**dadurch gekennzeichnet,**
**daß** die Sensorik (5) an bestehende Arbeitsköpfe (3) nachrüstbar ist.

## Claims

1. A vehicle (1) with at least one side-extending boom (4) for mounting a working head (3), in particular a milling or mowing head, wherein a mounted working head (3) can be pivoted around a mounting pin (A) lying parallel to the traveling direction, wherein a force can be exerted from outside on the working head (3) in one or the other direction of rotation (U; GU) depending on the position and formation of the area (B) to be machined,
**characterized in that**
the working head (3) is provided with a sensor system (5) for determining a pressure difference and with a positioning device (6) for the alignment angle (α) of the working head (3) around the mounting pin (A), wherein it is possible to determine a pressure difference between an inner support area (IB) of the working head (3) lying transversely between a projection of the mounting pin on the floor (B) and the supporting vehicle (1) and an outer support area (AB) of the working head (3) lying transversely outside of the projection, wherein the working head (3) has allocated to it at least two hydraulic cylinders (9; 10) spaced apart from each other in a direction transverse to the mounting pin, whose pressure difference can be detected by the sensor system (5) and which are respectively arranged between a mounting frame of the working head (3) and a tool and/or tactile aid provided during operation with contact to the machined area.

2. The vehicle (1) according to claim 1,
**characterized in that**
the positioning device (6) is hydraulic or pneumatic.

3. The vehicle (1) according to claim 2,
**characterized in that**
the positioning device (6) is hydraulic.

4. The vehicle (1) according to one of claims 1 to 3, **characterized in that**
the boom (4), when fully extended, enables a transverse distance (Q) of the mounting pin (A) of over seven meters to the closest longitudinal edge of the vehicle (1).

5. The vehicle (1) according to one of claims 1 to 4, **characterized in that**
a pressure difference between the two hydraulic cylinders (9; 10) spaced apart from each other in a direction transverse to the mounting pin is acquired by the sensor system (5) without acquiring the absolute pressures.

6. The vehicle (1) according to one of claims 1 to 5, **characterized in that**
a first hydraulic cylinder (9) is provided for acquiring an external force acting on the inner support area (IB), and a second hydraulic cylinder (10) is provided for acquiring an external force acting on the outer support area (AB).

7. The vehicle (1) according to claim 6,
**characterized in that**
a pressure difference acquired by the sensor system (5) can be used to actuate at least one positioning device (6), which can change the angular alignment between a part of the boom (4) carrying the mounting pin (A) and the working head (3).

8. The vehicle (1) according to one of claims 1 to 7, **characterized in that**
given a decrease in the external pressure on the outer support area (AB) resulting from the activity of the positioning device (6), a pressure relief of the second hydraulic cylinder (10) can be detected, a tensile force arises on the outer support area (AB), and the angle (α) of the working head (3) can be changed clockwise (U) as viewed from the front.

9. The vehicle (1) according to one of claims 1 to 8, **characterized in that**
given an increase in the external pressure on the outer support area (AB) resulting from the activity of the positioning device (6), a pressure relief of the first hydraulic cylinder (9) can be detected, a compressive force arises on the outer support area (AB), and the angle (α) of the working head (3) can be changed counterclockwise (GU) as viewed from the front.

10. The vehicle (1) according to one of claims 1 to 9, **characterized in that**
the angle (α) is adjusted until such time as the sensor system (5) acquires an identical pressure on both sides of the axis.

11. The vehicle (1) according to one of claims 1 to 10, **characterized in that**
one end of each hydraulic cylinder (9; 10) is indirectly or directly connected with a scanning unit that scans the floor (B).

12. The vehicle (1) according to claim 11,
**characterized in that**
at least one tool, in particular a mowing roller, is used as the scanning unit.

13. The vehicle (1) according to one of claims 1 to 12, **characterized in that**
the hydraulic cylinders (9; 10) of the sensor system (5) are secured via check valves.

14. The vehicle (1) according to one of claims 1 to 13, **characterized in that**
the sensor system comprises electrical resistance measuring devices fastened to the side of the working head (3) and connected with the hydraulic cylinders (9; 10).

15. The vehicle (1) according to one of claims 1 to 14, **characterized in that**
the sensor system (5) can be retrofitted on existing working heads (3).

## Revendications

1. Véhicule (1), pourvu d'au moins un bras (4) latéralement déployable, destiné à maintenir une tête de travail (3), notamment une tête de fraisage ou de fauchage, une tête de travail (3) montée étant pivotante autour d'un axe de maintien (A) situé à la parallèle de la direction de déplacement, en fonction de la position et de la configuration de la zone à traiter (B), une force étant susceptible d'être introduite par l'extérieur, dans l'un ou l'autre des sens de pivotement (U ; GU) sur la tête de travail (3),
**caractérisé**
**en ce que** la tête de travail (3) est munie d'un système de capteurs (5), destiné à déterminer une pression différentielle et d'un dispositif de réglage (6) pour l'angle d'orientation (α) de la tête de travail (3) autour de l'axe de maintien (A), une pression différentielle entre une zone d'appui (IB) intérieure de la tête de travail (3) située à la transversale entre une projection de l'axe de maintien sur le sol (B) et le véhicule (1) porteur et une zone d'appui (AB) extérieure de la tête de travail (3), située à la transversale à l'extérieur de la projection pouvant être déterminée, à la tête de travail (3) étant associés au moins deux vérins hydrauliques (9 ; 10) écartés l'un de l'autre dans une direction à la transversale de l'axe de maintien, dont la pression différentielle est détectable par le système de capteurs (5) et qui sont placés chacun entre un cadre de maintien de la tête de travail (3) et un moyen de travail et / ou un moyen de balayage, muni en fonctionnement d'un contact avec la zone à traiter.

2. Véhicule (1) selon la revendication 1,
**caractérisé,**
**en ce que** le dispositif de réglage (6) est hydraulique ou pneumatique.

3. Véhicule (1) selon la revendication 2,
**caractérisé,**
**en ce que** le dispositif de réglage (6) est hydraulique.

4. Véhicule (1) selon l'une quelconque des revendications 1 à 3,
**caractérisé,**
**en ce que** le bras (4) déployé au maximum permet un écart transversal (Q) de l'axe de maintien (A) de plus de sept mètres jusqu'au bord longitudinal le plus proche du véhicule (1).

5. Véhicule (1) selon l'une quelconque des revendications 1 à 4,
**caractérisé,**
**en ce qu'**une détection de la pression différentielle entre les deux vérins hydrauliques (9 ; 10) écartés l'un de l'autre dans une direction à la transversale de l'axe de maintien est effectuée par le système de capteurs (5) sans détection des pressions absolues.

6. Véhicule (1) selon l'une quelconque des revendications 1 à 5,
**caractérisé**
**en ce qu'**un premier vérin hydraulique (9) est prévu pour détecter l'effet d'une force extérieure sur la zone d'appui (IB) intérieure et un deuxième vérin hydraulique (10) est prévu pour détecter l'effet d'une force extérieure sur la zone d'appui (AB) extérieure.

7. Véhicule (1) selon la revendication 6,
**caractérisé**
**en ce que** par l'intermédiaire d'une pression différentielle détectée par le système de capteurs (5), au moins un dispositif de réglage (6) est activable par lequel l'orientation angulaire entre une partie du bras (4) portant l'axe de maintien (A) et la tête de travail (3) peut être modifiée.

8. Véhicule (1) selon l'une quelconque des revendications 1 à 7,
**caractérisé**
**en ce que** lors d'une réduction de la pression extérieure exercée sur la zone d'appui (AB) extérieure par l'activité du dispositif de réglage (6), une décharge de pression du deuxième vérin hydraulique (10) est détectable, il se produit une force de traction sur la zone d'appui (AB) extérieure et l'angle (α) de la tête de travail (3), vu par l'avant dans le sens horaire (U) peut être modifié.

9. Véhicule (1) selon l'une quelconque des revendications 1 à 8,
**caractérisé**
**en ce que** lors d'une augmentation de la pression extérieure exercée sur la zone d'appui (AB) extérieure par l'activité du dispositif de réglage (6), une décharge de pression du premier vérin hydraulique (9) est détectable, il se produit une force de pression sur la zone d'appui (AB) extérieure et l'angle (α) de la tête de travail (3), vu par l'avant dans le sens antihoraire (GU) peut être modifié.

10. Véhicule (1) selon l'une quelconque des revendications 1 à 9,
**caractérisé**
**en ce que** le réajustement de l'angle (α) perdure jusqu'à ce que le système de capteurs (5) détermine une pression identique exercée sur les deux côtés de l'axe.

11. Véhicule (1) selon l'une quelconque des revendications 1 à 10,
**caractérisé**
**en ce qu'**une extrémité de chacun des vérins hydrauliques (9 ; 10) est indirectement ou directement reliée avec un organe de balayage balayant le sol (B).

12. Véhicule (1) selon la revendication 11,
**caractérisé**
**en ce qu'**au moins un moyen de travail, notamment un rouleau de fauchage fait office d'organe de balayage.

13. Véhicule (1) selon l'une quelconque des revendications 1 à 12,
**caractérisé**
**en ce que** les vérins hydrauliques (9; 10) du système de capteurs (5) sont sécurisés par l'intermédiaire de clapets antiretour.

14. Véhicule (1) selon l'une quelconque des revendications 1 à 13,
**caractérisé**
**en ce que** le système de capteurs comprend des appareils de mesure de la résistance électrique, montés latéralement sur la tête de travail (3) et reliés avec les vérins hydrauliques (9 ; 10).

15. Véhicule (1) selon l'une quelconque des revendications 1 à 14,
**caractérisé**
**en ce que** le système de capteurs (5) peut équiper postérieurement des têtes de travail (3) existantes.
